# EUROPÄISCHE PATENTSCHRIFT

(11) **EP 1 419 832 B1**
(45) Veröffentlichungstag und Bekanntmachung des Hinweises auf die Patenterteilung: **23.07.2008**
(21) Anmeldenummer: 02021106.6
(22) Anmeldetag: 23.09.2002
(51) Int. Cl.: B21D 28/00, B21D 5/00, B23Q 41/00

(54) **Maschinelle Anordnung mit mehreren maschinellen Bearbeitungswerkzeugen zum Bearbeiten von plattenartigen Werkstücken**
Device arrangement comprising several shaping devices for shaping sheet like workpieces
Appareillage comprenant plusieurs dispositifs de formage pour le formage des pièces en forme de plaque

(43) Veröffentlichungstag der Anmeldung: 19.05.2004
(73) Patentinhaber: TRUMPF Werkzeugmaschinen GmbH + Co. KG, 71254 Ditzingen (DE)
(72) Erfinder: Klinkhammer, Marc, 71254 Ditzingen (DE); Laib, Wolfgang, 74354 Besigheim (DE); Bytow, Peter, 75397 Simmozheim (DE)
(74) Vertreter: Kohler Schmid Möbus

(56) Entgegenhaltungen:
- WO-A-96/24445
- DE-A- 19 720 478
- GB-A- 2 032 308
- JP-A- 5 042 334
- JP-A- 11 254 059

## Beschreibung

Die Erfindung betrifft eine maschinelle Anordnung zum Bearbeiten von plattenartigen Werkstücken, insbesondere von Blechen, gemäß dem Oberbegriff des Anspruchs 1. Eins solche Anordnung ist aus der JP-A-05042334 bekannt.

Eine Anordnung ist offenbart in DE 34 18 432 C2. Die Druckschrift beschreibt eine Mehrfachbearbeitungsmaschine, die neben einem Stanzwerkzeug ein Formgebungs-, insbesondere ein Biegewerkzeug aufweist. Mittels einer Koordinatenführung werden zu bearbeitende Werkstücke zunächst dem Stanzwerkzeug zugeführt und im Anschluss an die dort durchgeführte Bearbeitung ohne Umspannen zu dem Formgebungs- bzw. Biegewerkzeug transferiert. Dort folgt dann die gewünschte formgebende Werkstückbearbeitung. Mittels eines Biegewerkzeuges wird das zu bearbeitende Werkstück entlang einer Biegelinie abgekantet, deren Verlauf vorgegeben und unveränderlich ist. In ihrem Verlauf ist die Biegelinie abgestimmt auf den zunächst ausgeführten Stanzvorgang. An dem bearbeiteten Werkstück verläuft die Biegelinie mit der gewünschten räumlichen Zuordnung gegenüber den an dem Stanzwerkzeug erstellten Ausstanzungen.

Den Stand der Technik dahingehend weiterzubilden, dass sich die Fähigkeit zur Bewältigung wechselnder Bearbeitungsaufgaben verbessert, hat sich die vorliegende Erfindung zum Ziel gesetzt.

Erfindungsgemäß gelöst wird diese Aufgabe durch die maschinellen Anordnungen gemäß den unabhängigen Patentanspruch 1.

Gemäß Patentanspruch 1 ist wenigstens ein Biegewerkzeug vorgesehen, das unter Veränderung des Verlaufs der Biegelinie gedreht und in unterschiedlichen Drehstellungen arretiert werden kann. Aufgrund dieser Erfindungsmerkmale lässt sich der Verlauf der Biegelinie mit geringem Aufwand an die Erfordernisse des jeweiligen Bearbeitungsfalles anpassen. Insbesondere ist es möglich, erforderliche Drehungen des Biegewerkzeuges automatisiert und beispielsweise von einer numerischen Maschinensteuerung gesteuert auszuführen. Die Werkstücke lassen sich mit unterschiedlichen Verläufen der Biegelinie bearbeiten, ohne dass zu diesem Zweck ein Umspannen der Werkstücke an der Werkstückbewegungseinrichtung erforderlich wäre. Die Automatisierung des gesamten Bearbeitungsvorganges gestaltet sich daher einfach; ausgesprochen hohe Geschwindigkeiten der Gesamtbearbeitung sind erreichbar. Zudem ist erfindungsgemäß nicht nur der Verlauf der Biegelinie sondern darüber hinaus auch die Breite der erstellten Biegung, also die Erstreckung der Biegung in Richtung der Biegelinie, je nach Anwendungsfall wähl- und einstellbar.

Besondere Ausführungsarten der Erfindung ergeben sich aus den abhängigen Patentansprüchen 2 und 3.

Patentanspruch 2 beschreibt eine Möglichkeit, Biegewerkzeuge zur Veränderung des Verlaufs der Biegelinie zu drehen. Zum Einsatz kommen dabei insbesondere numerisch gesteuerte Drehantriebe. Sind diese Drehantriebe selbstsperrend ausgeführt, so ergibt sich nach Abschluss der Drehbewegungen eine Arretierung des Biegewerkzeuges ohne weiteres.

Die Verwendung wenigstens eines als Schwenkbiegewerkzeug ausgebildeten Biegewerkzeuges, wie dies gemäß Patentanspruch 3 in vorteilhafter Weiterbildung der Erfindung vorgesehen ist, hat den Vorteil, dass bei der Werkstückbearbeitung lediglich der abgebogene Werkstückschenkel seine Ausgangslage verlässt. Das restliche Werkstück kann während des Bearbeitungsvorganges-anders als beispielsweise beim Gesenkbiegen - seine Ausgangslage beibehalten und folglich an der Werkstückbewegungseinrichtung eingespannt bleiben, ohne dass diese zu diesem Zweck mit kinematisch aufwändig gestalteten Werkstückhaltevorrichtungen zu versehen wäre. Insbesondere für die Werkstückbearbeitung im Innern der Werkstückfläche ist die Verwendung von Schwenkbiegewerkzeugen zu empfehlen.

Nachstehend wird die Erfindung anhand beispielhafter und stark schematisierter Darstellungen von Ausführungsbeispielen näher erläutert. Es zeigen:
- Figur 1: eine maschinelle Anordnung erster Bauart mit einem Biege- sowie mit einem Stanzwerkzeug für die Blechbearbeitung,
- Figur 2: das Biegewerkzeug der Anordnung gemäß Figur 1 in Einzeldarstellung,
- Figur 3: das Biegewerkzeug gemäß den Figuren 1 und 2 nach Beendigung eines Abkantvorganges,
- Figur 4: eine maschinelle Anordnung zweiter Bauart mit zwei Biegewerkzeugen und einem Stanzwerkzeug für die Blechbearbeitung und
- Figur 5: eine maschinelle Anordnung dritter Bauart mit zwei Biegewerkzeugen und einem Stanzwerkzeug für die Blechbearbeitung.

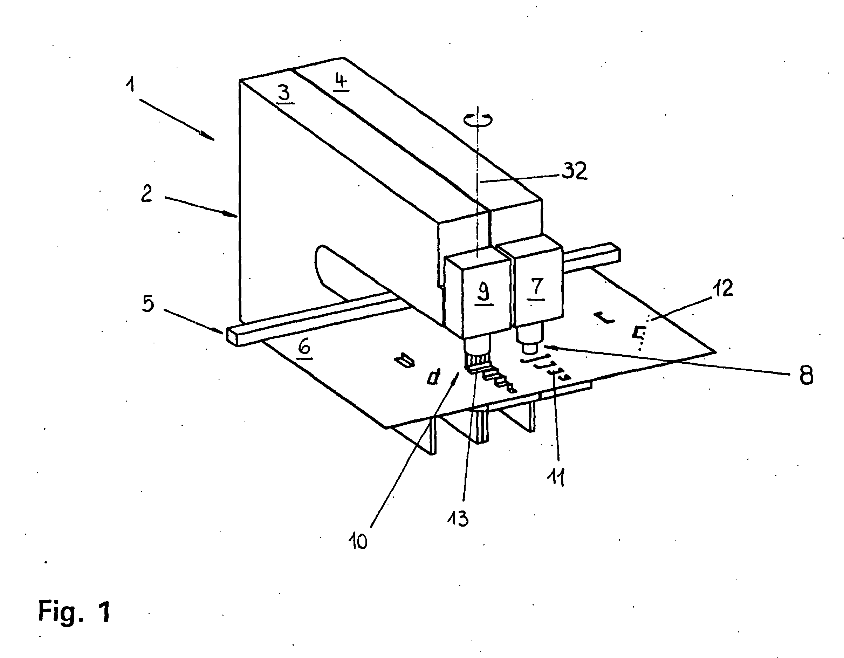

Gemäß Figur 1 besitzt eine maschinelle Anordnung 1 ein C-förmiges Maschinengestell 2 mit zwei untereinander verbundenen Gestellhälften 3, 4. Im Rachenraum zwischen den oberen und den unteren Schenkeln der Gestellhälften 3, 4 ist eine Werkstückbewegungseinrichtung in Form einer herkömmlichen Koordinatenführung 5 untergebracht. Ein zu bearbeitendes Werkstück, nämlich ein Blech 6, ist an der Koordinatenführung 5 mittels nicht gezeigter Spannpratzen gehalten und durch entsprechende Verfahrbewegung der Koordinatenführung 5 in der horizontalen Blechebene beweglich. Bei seiner Bewegung mittels der Koordinatenführung 5 ruht das Blech 6 auf einem Werkstücktisch üblicher Bauart, der an der Oberseite der unteren Schenkel der Gestellhälften 3, 4 angebracht ist.

Zweck der mittels der Koordinatenführung 5 ausgeführten Bewegung des Bleches 6 ist dessen Positionierung gegenüber Bearbeitungseinrichtungen, die an den freien Enden der Schenkel der Gestellhälften 3, 4 vorgesehen sind. Bei den Bearbeitungseinrichtungen handelt es sich im Einzelnen um eine Stanzstation 7 mit einem Bearbeitungswerkzeug in Form eines Stanzwerkzeuges 8 sowie um eine Biegestation 9, an welcher als Bearbeitungswerkzeug ein Biegewerkzeug 10 vorgesehen ist. Anstelle der Stanzstation 7 sind auch andersartige Bearbeitungsstationen, etwa eine Wasserstrahl-, eine Plasma- und/oder eine Laserschneideinrichtung aber auch eine weitere Biegestation, denkbar.

Die Stanzstation 7 und das Stanzwerkzeug 8 sind herkömmlicher Bauart. Das Stanzwerkzeug 8 umfasst als Werkzeughälften einen oberhalb des Bleches 6 angeordneten und in vertikaler Richtung heb- und senkbaren Stanzstempel sowie eine an der Unterseite des Bleches 6 vorgesehene Stanzmatrize. Mittels des Stanzwerkzeuges 8 werden an dem Blech 6 Laschen 11 mit unterschiedlicher Größe an drei Seiten freigestanzt. Infolge entsprechender, mittels der Koordinatenführung 5 ausgeführter Bewegung des Bleches 6 gegenüber dem Stanzwerkzeug 8 bei der Blechbearbeitung sind die Laschen 11 in der Ebene des Bleches 6 unterschiedlich ausgerichtet. Die Übergänge der Laschen 11 in das restliche Blech 6 erstrecken sich dementsprechend mit unterschiedlich ausgerichteter, in Figur 1 punktierter Verlaufslinie 12.

An der Biegestation 9 werden die zunächst in der Ebene des Bleches 6 liegenden Laschen 11 jeweils entlang einer Biegelinie 13 abgekantet. Die Abkantbreite, also die Erstreckung der Abkantung in Richtung der Biegelinie 13, variiert entsprechend den Abmessungen der Laschen 11. Die Ausrichtung der Biegelinie 13 entspricht der Ausrichtung der Verlaufslinie 12 an den ebenen Laschen 11 und variiert folglich ebenfalls.

Die Abkantung einer der Laschen 11 entlang der betreffenden Biegelinie 13 wird nachstehend beschrieben.

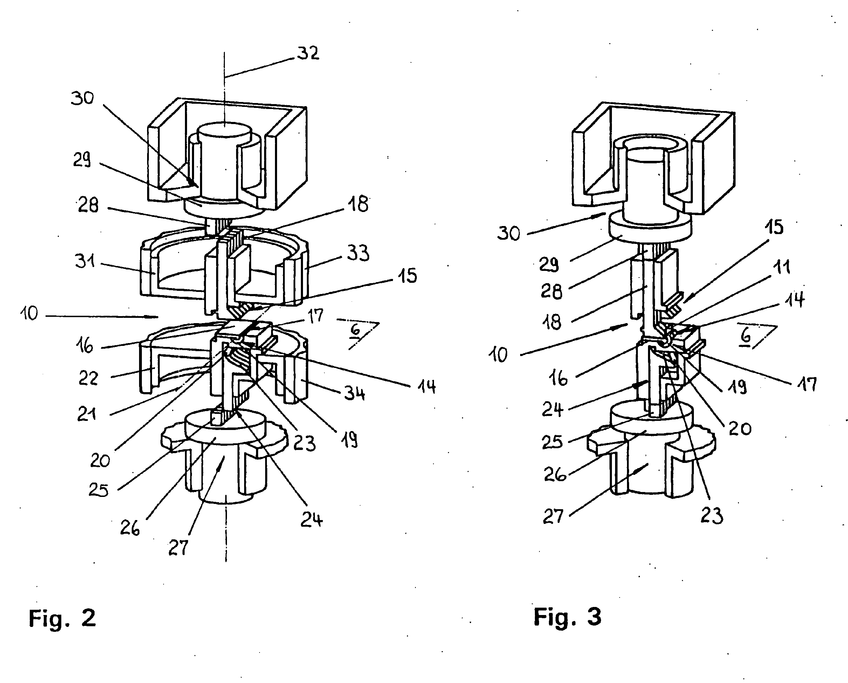

Gemäß den Figuren 2 und 3 handelt es sich bei dem Biegewerkzeug 10 um ein Schwenkbiegewerkzeug mit einer Biegewange 14, einem Niederhalter 15 sowie einer Werkstückauflage 16. Die Biegewange 14 ist im gezeigten Beispielsfall aus fünf Biegewangensegmenten 17, der Niederhalter 15 aus fünf Niederhaltersegmenten 18 zusammengesetzt. Sowohl die Biegewangensegmente 17 als auch die Niederhaltersegmente 18 sind in Richtung der von der Biegewange 14 im Zusammenwirken mit dem Niederhalter 15 definierten Biegelinie 13 aneinander gereiht.

Die Biegewangensegmente 17 sind als Schwenkhebel ausgeführt und besitzen jeweils einen Biegearm 19 sowie einen Antriebsarm 20. Sie sind um eine Schwenkachse 21 schwenkbar an einer Biegewangenhalterung 22 der Biegestation 9 gelagert. Die Antriebsarme 20 stützen sich mit ihren freien Enden jeweils auf einer Steuerbahn 23 ab, die ihrerseits an einem Steuerelement 24 vorgesehen ist. Die Steuerelemente 24 sind an der Biegewangenhalterung 22 linear verschiebbar geführt. Über Kupplungsteile 25 können die Steuerelemente 24 mit einem Kolben 26 eines Biegeantriebes 27 antriebsverbunden werden. Jedem Steuerelement 24 ist ein einzelnes Kupplungsteil 25 zugeordnet. Die Kupplungsteile 25 können mittels nicht gezeigter Stelleinrichtungen einzeln zwischen den Steuerelementen 24 und dem Kolben 26 des Biegeantriebes 27 ein- oder ausgerückt werden.

Ähnlich wie an der Biegewange 14 stellen sich die Verhältnisse an dem Niederhalter 15 dar. Jedem der Niederhaltersegmente 18 ist ein Kupplungsteil 28 zugeordnet. Mittels einer ebenfalls nicht gezeigten Stelleinrichtung lassen sich die Kupplungsteile 28 einzeln zwischen den Niederhaltersegmenten 18 und einem Kolben 29 eines Niederhalterantriebes 30 ein- oder ausrücken. Die Niederhaltersegmente 18 sind in der Bewegungsrichtung des Kolbens 29 an einem Niederhalterträger 31 linear beweglich geführt.

Die Ausgangssituation vor Beginn der biegenden Bearbeitung des Bleches 6 ist in Figur 2 dargestellt. Das gestrichelt angedeutete Blech 6 ruht auf der Werkstückauflage 16. Die Biegewange 14 bzw. die Biegewangensegmente 17 nehmen ebenso wie der Niederhalter 15 bzw. die Niederhaltersegmente 18 ihre Ausgangsstellung ein. Die Kupplungsteile 25, 28 sind ausgerückt.

Ausgehend von diesen Verhältnissen wird eine auf die Länge der zu erstellenden Abkantung abgestimmte Anzahl von Kupplungsteilen 25, 28 zwischen dem Kolben 26 des Biegeantriebes 27 und den Steuerelementen 24 bzw. zwischen dem Kolben 29 des Niederhalterantriebes 30 und den Niederhaltersegmenten 18 eingerückt. In dem gezeigten Beispielsfall werden zu diesem Zweck jeweils zwei Kupplungsteile 25, 28 aus ihrer Außerfunktions- in ihre Funktionsstellung überführt.

Wird nun der Niederhalterantrieb 30 betätigt, so senken sich die zuvor aktivierten, d.h. mit dem Niederhalterantrieb 30 antriebsverbundenen Niederhaltersegmente 18 auf das Blech 6 ab. Infolge einer entsprechenden Positionierung des Bleches 6 gegenüber der Biegestation 9 kommen dabei die aktivierten Niederhaltersegmente 18 mit ihren vorspringenden Enden entlang der Verlaufslinie 12, an welcher die Lasche 11 abzukanten ist, an dem restlichen Blech 6 zur Auflage. Aufgrund des mittels des Niederhalterantriebes 30 aufgebrachten Anpressdruckes ist das Blech 6 zwischen den wirksamen Niederhaltersegmenten 18 und der Werkstückauflage 16 gegen jegliche Bewegung gesichert fixiert.

Wird nun der Kolben 26 des Biegeantriebes 27 ausgehend von seiner Stellung gemäß Figur 2 nach oben bewegt, so verlagern sich die beiden aktivierten Steuerelemente 24 entsprechend. Dabei gleiten die zugehörigen Biegewangensegmente 17 mit ihren Antriebsarmen 20 an den Steuerbahnen 23 der beiden Steuerelemente 24 entlang. Die beiden Biegewangensegmente 17 verschwenken folglich um die Schwenkachse 21 und biegen mit ihren Biegearmen 19 die Lasche 11 des Bleches 6, wie in Figur 3 gezeigt, nach oben. Damit ist die gewünschte Abkantung entlang der Biegelinie 13 erstellt und das Biegewerkzeug 10 kann durch Rückhub der Kolben 26, 29 und entsprechende Rückstellbewegungen der zur Durchführung der Werkstückbearbeitung genutzten Biegewangensegmente 17 und Niederhaltersegmente 18 in den Ausgangszustand gemäß Figur 2 rücküberführt werden.

Ist eine Lasche 11 mit gegenüber den vorstehend beschriebenen Verhältnissen geänderter Richtung der Verlaufslinie 12 abzukanten, so ist vor Beginn der biegenden werkstückbearbeitung das Biegewerkzeug 10 bezüglich einer senkrecht zu dem Blech 6 verlaufenden Werkzeugdrehachse 32 um einen entsprechenden Winkel zu drehen. Zu diesem Zweck sind herkömmliche Drehantriebe vorgesehen, mittels derer sich zum einen der Niederhalterträger 31 mit dem Niederhalter 15 und zum andern die Biegewangenhalterung 22 mit der Biegewange 14 um die Werkzeugdrehachse 32 bewegen lassen. Bei dieser Drehbewegung drehfest bleiben eine Drehführung 33 des Niederhalterträgers 31 und eine Drehführung 34 der Biegewangenhalterung 22. Die Drehbewegungen des Niederhalterträgers 31 und der Biegewangenhalterung 22 werden von der CNC-Steuerung der Anordnung 1 gesteuert und zumindest bezüglich der Dreh-Endstellung miteinander synchronisiert. Der Niederhalterträger 31 und die Biegewangenhalterung 22 sind in der jeweils eingenommenen Drehstellung arretiert. Nachdem der Verlauf der Biegelinie 13 durch die beschriebene Verstellung des Niederhalterträgers 31 und der Biegewangenhalterung 22 verändert ist, kann der gewünschte Abkantvorgang durchgeführt werden. In Figur 1 dargestellt sind insgesamt drei unterschiedliche Verläufe der Biegelinie 13.

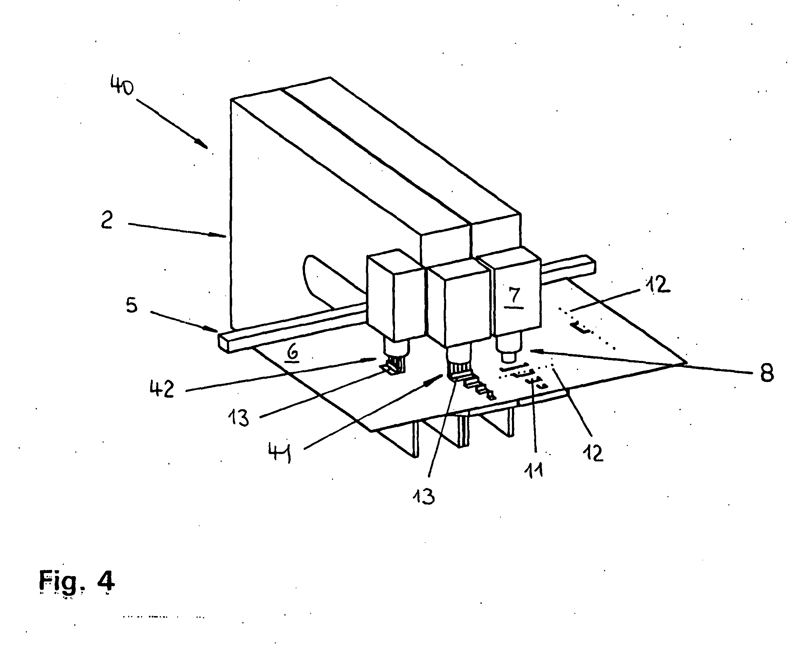

Eine in Figur 4 dargestellte maschinelle Anordnung 40 unterscheidet sich von der maschinellen Anordnung 1 gemäß den Figuren 1 bis 3 dadurch, dass zwei Biegewerkzeuge 41, 42 vorgesehen sind und dass diese Biegewerkzeuge unveränderlich ausgerichtet, d.h. nicht um eine Werkzeugdrehachse drehbar sind. Die Biegelinie 13 ist an der maschinellen Anordnung 40 mit zwei, im gezeigten Beispielsfall rechtwinkligen Verläufen definiert. Auch im Falle der maschinellen Anordnung 40 sind die Verläufe der Biegelinie 13 auf die Richtungen der Verlaufslinie 12 abgestimmt, entlang derer mittels des Stanzwerkzeuges 8 an drei Seiten freigeschnittene Laschen 11 in das restliche Blech 6 übergehen.

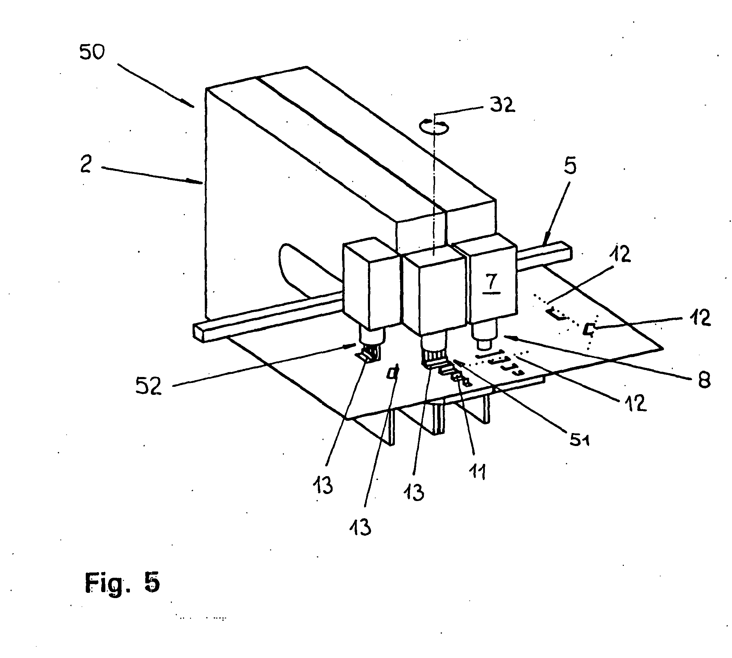

Eine in Figur 5 gezeigte maschinelle Anordnung 50 schließlich kombiniert ein um eine Werkzeugdrehachse 32 drehbares Biegewerkzeug 51 mit einem Biegewerkzeug 52 mit unveränderlicher Ausrichtung.

Abgesehen von den genannten Unterschieden stimmen die maschinellen Anordnungen 1, 40, 50 in Aufbau und Funktionsweise miteinander überein. Insbesondere sind sämtliche maschinellen Anordnungen 1, 40, 50 mit einer programmierbaren Rechnersteuerung versehen.

Abweichungen von den beispielhaft dargestellten und beschriebenen Verhältnissen sind u.a. bezüglich der Ausgestaltung des Maschinengestells denkbar. So können etwa anstelle des aus den beiden miteinander verbundenen Gestellhälften 3, 5 bestehenden Maschinengestells 2 ein einheitliches Maschinengestell oder zwei räumlich getrennte Einzelgestelle vorgesehen werden. Auch sind statt der dargestellten C-Form des Maschinengestells 2 andere Gestellformen möglich.

## Patentansprüche

1. Maschinelle Anordnung zum Bearbeiten von plattenartigen Werkstücken, insbesondere von Blechen (6),
mit maschinellen Bearbeitungswerkzeugen, von denen wenigstens eines als Biegewerkzeug (10; 51) ausgebildet ist sowie
mit einer Werkstückbewegungseinrichtung (5), mittels derer die Werkstücke zwischen einem Biegewerkzeug (10; 51) einer Bearbeitungseinrichtung und einem dem Biegewerkzeug (10; 51) im Bearbeitungsgang vor- oder nachgeordneten Bearbeitungswerkzeug einer anderen Bearbeitungseinrichtung bewegbar sind,
wobei das Biegewerkzeug (10; 51) der einen Bearbeitungseinrichtung beidseits des zu biegenden Werkstückes angeordnete Werkzeughälften umfasst und die genannte Bearbeitungseinrichtung für jede der beiden Werkzeughälften des Biegewerkzeuges (10; 51) jeweils eine Werkzeugantriebseinrichtung aufweist, mittels derer die Werkzeughälften des Biegewerkzeuges (10; 51) zum Biegen des Werkstückes entlang einer Biegelinie (13) betätigbar sind,
und die Werkzeughälften des Biegewerkzeuges (10; 51) jeweils zumindest einen durch eine der Werkzeugantriebseinrichtungen bewegbaren Werkzeugteil aufweisen und mittels der bewegbaren Werkzeugteile das zu biegende Werkstück beaufschlagbar sowie entlang der Biegelinie biegbar ist und die bewegbaren Werkzeugteile in Richtung der Biegelinie (13) aufeinanderfolgende Werkzeugteilsegmente umfassen, von denen jeweils wenigstens eines wahlweise mittels einer der Werkzeugantriebseinrichtungen bewegbar ist,
und wobei der Verlauf der Biegelinie (13) sowie die Breite der zu erstellenden Biegung abgestimmt auf die Werkstückbearbeitung an dem Bearbeitungswerkzeug der anderen Bearbeitungseinrichtung definiert ist,
**dadurch gekennzeichnet, dass**
die bewegbaren Werkzeugteile der Werkzeughälften des Biegewerkzeuges (10, 51) unter Veränderung des Verlaufs der Biegelinie (13) drehbar und in unterschiedlichen Drehstellungen arretierbar sind und je Werkzeughälfte wenigstens ein Werkzeugteilsegment der bewegbaren Werkzeugteile mittels eines Kupplungsteiles (28) wahlweise mit der jeweiligen Werkzeugantriebseinrichtung antriebsverbindbar ist, so dass sowohl der Verlauf der Biegelinie (13) als auch die Breite der zu erstellenden Biegung einstellbar sind.

2. Maschinelle Anordnung nach Anspruch 1, **dadurch gekennzeichnet, dass** wenigstens ein Biegewerkzeug (10; 51) beidseits des zu biegenden Werkstücks angeordnete Werkzeughälften umfasst, wobei die Werkzeughälften unter Veränderung des Verlaufs der Biegelinie (13) mittels jeweils eines zugeordneten Drehantriebes und synchronisiert drehbar und in unterschiedlichen Drehstellungen arretierbar sind.

3. Maschinelle Anordnung nach wenigstens einem der vorhergehenden Ansprüche, **dadurch gekennzeichnet, dass** wenigstens ein Biegewerkzeug (10; 51,) als Schwenkbiegewerkzeug ausgebildet ist mit einem bewegbaren Werkzeugteil in Form einer um eine in Richtung der Biegelinie (13) verlaufende Schwenkachse (21) schwenkbaren Biegewange (14).

## Claims

1. Mechanical arrangement for processing plate-like workpieces, in particular metal sheets (6),
having mechanical processing tools, at least one of which is constructed as a bending tool (10; 51), and
having a workpiece-moving device (5), by means of which the workpieces can be moved between a bending tool (10; 51) of a processing device and a processing tool of another processing device, which tool is arranged upstream or downstream of the bending tool (10; 51) in the processing operation,
with the bending tool (10; 51) of the first processing device comprising tool halves which are arranged at both sides of the workpiece to be bent and the said processing device having, for each of the two tool halves of the bending tool (10; 51), a tool-driving device by means of which the tool halves of the bending tool (10; 51) can be actuated in order to bend the workpiece along a bending line (13),
and the tool halves of the bending tool (10; 51) each having at least one tool part which can be moved by one of the tool-driving devices and the workpiece to be bent being able to be acted upon by means of the movable tool parts and being able to be bent along the bending line, and the movable tool parts comprising tool part-segments which are sequential in the direction of the bending line (13) and at least one of which can optionally be moved by means of one of the tool-driving devices,
and with the path of the bending line (13) and the width of the bending to be brought about being defined in accordance with the workpiece processing on the processing tool of the other processing device,
**characterised in that**
the movable tool parts of the tool halves of the bending tool (10, 51) can be rotated with the path of the bending line (13) being changed and can be locked in various rotational positions and, for each tool half, at least one tool part-segment of the movable tool parts can optionally be drivingly connected by means of a coupling member (28) to the respective tool-driving device so that both the path of the bending line (13) and the width of the bending to be brought about can be adjusted.

2. Mechanical arrangement according to claim 1, **characterised in that** at least one bending tool (10; 51) comprises tool halves which are arranged at both sides of the workpiece to be bent, with the tool halves being rotatable by means of an associated rotary drive in a synchronised manner with the path of the bending line (13) being changed, and being able to be locked in various rotational positions.

3. Mechanical arrangement according to at least one of the preceding claims, **characterised in that** at least one bending tool (10; 51) is constructed as a swing bending tool, having a movable tool part in the form of a bending wall (14) which can be pivoted about a pivot axis (21) which extends in the direction of the bending line (13).

## Revendications

1. Ensemble mécanique pour travailler des pièces en forme de plaques, notamment des tôles (6), comprenant des outils de travail mécaniques dont au moins l'un est réalisé en tant qu'outil de pliage (10 ; 51), comprenant également un dispositif de déplacement (5) pour les pièces, au moyen duquel les pièces peuvent être déplacées entre un outil de pliage (10 ; 51) d'un dispositif de travail et un outil de façonnage d'un autre dispositif de travail, qui précède ou suit l'outil de pliage (10 ; 51) dans le processus de travail,
sachant que l'outil de pliage (10 ; 51) de l'un des dispositifs de travail comprend des moitiés d'outil placées de part et d'autre de la pièce à plier et que le dispositif de travail cité présente, pour chacune des deux moitiés d'outil de l'outil de pliage (10 ; 51), un dispositif d'entraînement d'outil, au moyen desquels les moitiés d'outil de l'outil de pliage (10 ; 51) peuvent être actionnées pour plier la pièce le long d'une ligne de pliage (13),
les moitiés d'outil de l'outil de pliage (10 ; 51) présentant chacune au moins une partie d'outil pouvant être déplacée par l'un des dispositifs d'entraînement d'outil, la pièce à plier pouvant être sollicitée au moyen des parties d'outil mobiles et pouvant être pliée le long de la ligne de pliage, les parties d'outil mobiles comprenant des segments de partie d'outil se succédant dans la direction de la ligne de pliage (13), dont au moins l'un peut chaque fois être déplacé sélectivement au moyen de l'un des dispositifs d'entraînement d'outil,
et le tracé de la ligne de pliage (13), ainsi que la largeur de la pliure à réaliser étant définis en fonction du travail opérée sur la pièce par l'autre outil de façonnage de l'autre dispositif de travail,
**caractérisé en ce que** les parties d'outil mobiles des moitiés d'outil de l'outil de pliage (10 ; 51) peuvent être tournées en modifiant le tracé de la ligne de pliage (13) et immobilisées dans différentes positions en rotation, et **en ce que**, pour chaque moitié d'outil, au moins un segment des parties d'outil mobiles peut être mis en liaison d'entraînement sélectivement avec le dispositif d'entraînement d'outil respectif à l'aide d'un élément d'accouplement (28), de sorte que l'on peut régler à la fois le tracé de la ligne de pliage (13) et la largeur de la pliure à réaliser.

2. Ensemble mécanique selon la revendication 1, **caractérisé en ce qu'**au moins un outil de pliage (10 ; 51) comprend des moitiés d'outil disposées de part et d'autre de la pièce à plier, un dispositif d'entraînement en rotation associé permettant de faire tourner les moitiés d'outil,en modifiant ce faisant le tracé de la ligne de pliage (13), de façon synchronisée et de les immobiliser dans différentes positions en rotation.

3. Ensemble mécanique selon au moins l'une des revendications précédentes, **caractérisé en ce qu'**au moins un outil de pliage (10 ; 51) est réalisé en tant qu'outil de pliage pivotant doté d'une partie d'outil mobile, qui a la forme d'une barre de pliage (14) pivotant autour d'un axe de pivotement (21) s'étendant dans la direction de la ligne de pliage (13).
